# EUROPEAN PATENT SPECIFICATION

(11) **EP 3 221 637 B1**
(45) Date of publication and mention of the grant of the patent: **23.05.2018**
(21) Application number: 14799776.1
(22) Date of filing: 19.11.2014
(51) Int. Cl.: F21V 8/00

(54) **A LIGHT EMITTING DEVICE**
LICHTEMITTIERENDE VORRICHTUNG
DISPOSITIF ÉLECTROLUMINESCENT

(43) Date of publication of application: 27.09.2017
(73) Proprietor: Philips Lighting Holding B.V., 5656 AE Eindhoven (NL)
(72) Inventor: HIKMET, Rifat Ata Mustafa, NL-5656 AE Eindhoven (NL); DIJKEN, Durandus Kornelius, NL-5656 AE Eindhoven (NL); VAN BOMMEL, Ties, NL-5656 AE Eindhoven (NL)
(74) Representative: Verweij, Petronella Daniëlle
(86) International application number: PCT/EP2014/074949
(87) International publication number: WO 2016/078700

(56) References cited:
- EP-A1- 2 447 746
- US-A- 5 667 289
- US-A1- 2002 175 632

## Description

### FIELD OF THE INVENTION

The invention relates to a light emitting device comprising a light source adapted for, in operation, emitting light with a first spectral distribution and a light guide adapted for converting the light with the first spectral distribution to light with a second spectral distribution.

### BACKGROUND OF THE INVENTION

High intensity light sources, and particularly white high intensity light sources, are interesting for various applications including spots, headlamps, stage-lighting and digital light projection. For such purposes, it is possible to make use of so-called luminescent concentrators where shorter wavelength light is converted to longer wavelengths in a highly transparent luminescent material. Such a transparent luminescent material is illuminated by LEDs to produce longer wavelengths within the luminescent material. Converted light, which will be waveguided in the luminescent material, is extracted from a surface leading to an intensity gain or, in other words, an increase in brightness.

Document WO 2012/056382 A1 describes a lighting device for such a purpose which comprises a waveguide and two light sources arranged at a surface of the waveguide. The waveguide may be provided with a luminescent material arranged on or in the waveguide and may be configured to convert light from a light source into luminescent material emission. Light is emitted from the waveguide through a surface extending parallel and opposite to the surface on which the light sources are arranged.

However, in such a configuration not all the light remains in the wave guide mode to be emitted from the light exit surface of the light guide but at least partly escapes from other surfaces of the light guide, which strongly reduces the efficiency of the light emitting device. Furthermore, in the prior art configurations it is not possible to provide for light recycling, for example for getting polarized or collimated light out of the system. Documents EP 2 447 746 A1, US 2002/0175632 A1, and US 5,667,289 disclose a light emitting device comprising a plurality of light sources.

### SUMMARY OF THE INVENTION

It is an object of the present invention to overcome this problem, and to provide a light emitting device with an improved efficiency and which allows for recycling of light.

According to a first aspect of the invention, this and other objects are achieved by means of a light emitting device comprising a plurality of light sources adapted for, in operation, emitting light with a first spectral distribution, a light guide comprising at least three side light input surfaces and a light exit surface, the at least three side light input surfaces and the light exit surface extending at an angle different from zero with respect to each other, the light guide being adapted for receiving the light with the first spectral distribution from the plurality of light sources at the at least three side light input surfaces, guiding the light to the light exit surface, converting at least a part of the light with the first spectral distribution to light with a second spectral distribution and coupling at least a part of the light with the second spectral distribution out of the light exit surface, the light exit surface having an area A and a circumference C, the at least three side light input surfaces having a height H; extending at an angle different from zero to a plane in which the light exit surface extends, the circumference C of the light exit surface being more than four times larger than the height H; of the side input surfaces and the area of the at least three side light input surfaces being less than four times the area A of the light exit surface.

As used herein the term "circumference", which generally refers to the boundary of a specific region or geometric figure, is intended to refer to the boundary of the light exit surface of the light guide.

By providing a light emitting device with a light guide being adapted for converting at least a part of the incoupled light to converted light with a different spectral distribution, a light guide is provided with which a particularly large amount of the converted light will stay in the light guide which can subsequently be extracted from one of the surfaces, which in turn leads to a particularly high intensity gain.

By providing a light emitting device in which the luminescent wave guide has at least three light input surfaces receiving light from the plurality of light sources, for example with at least one light source arranged at each of the at least three side light input surfaces, and a light exit surface with a circumference which is more than 4 times larger than the height of the at least three side light input surfaces, while the area of the at least three side light input surfaces is less than 4 times the area of the light exit surface, light that would otherwise escape through other surfaces of the light guide than the light exit surface becomes partially reflected back into the light guide and may thus be recycled and eventually emitted through the light exit surface. This increases the amount of light leaving the exit surface and leads to a considerably improved brightness. Reflecting light back into the device which light then escapes from the exit surface leads to an increased efficiency.

In an embodiment the light guide comprises a length L, a width W and a height H, the length L and the width W of the light guide extending perpendicular to one another in the plane in which the light exit surface extends, the height H of the light guide being equal to the height H; of the at least three side light input surfaces, and the height H of the light guide being smaller than each of the length L and the width W of the light guide.

Keeping the height of the light guide and thereby of the side light input surfaces smaller than the width and the length of the light guide decreases the amount of light lost from other surfaces than the light exit surface and thus increases the system efficiency.

In an embodiment the light guide comprises four or more side light input surfaces and the total area of the four or more side light input surfaces is less than four times the area A of the light exit surface.

In addition to the above-mentioned advantages relating to the relation between the area of the side light input surfaces and the area of the light exit surface, such an embodiment makes it possible to pump the light guide with an even larger number of light sources which in turn provides for an increased gain in light output and thus an increased gain in intensity and furthermore to a particularly high brightness of the light emitted by the light emitting device. For example, in an embodiment the light guide is plate shaped and on each of all the four side surfaces at least one light source is arranged.

In an embodiment the light emitting device further comprises at least one further light source adapted for, in operation, emitting light with the first spectral distribution, the light guide further comprising a bottom light input surface extending parallel to the light exit surface, the light guide being adapted for receiving the light with the first spectral distribution from the at least one further light source at the at least one bottom light input surface, guiding the light to the light exit surface, converting at least a part of the light with the first spectral distribution to light with the second spectral distribution and coupling at least a part of the light with the second spectral distribution out of the light exit surface.

Thereby a larger number of light sources, with which the light guide may be pumped, may be provided on the light guide as the total area available for this purpose is increased. Pumping the transparent luminescent light guide with a larger number of light sources than the number which would fit the exit surface provides for an increased in light input and thus an increased amount of converted light leaving the exit surface and thus high brightness of the light emitted by the light emitting device as well as increased amount of light output.

The light guide may be a parallelepiped with the area of the side surfaces not more than four times larger than the area of the exit surface, and the parallelepiped may be a box or a cube.

In an embodiment the height H; of the at least three side light input surfaces is smaller than 10 mm and larger than 0.5 mm.

In an embodiment the area of the exit surface is smaller than 100 mm² and larger than 0.25 mm².

In an embodiment at least one of the length L and the width W of the light guide is smaller than 25 mm and larger than 2 mm.

By providing a light emitting device with a transparent luminescent light guide having any one or more of the above-mentioned dimensions a light guide is provided with which a particularly large amount of the light, that would otherwise escape through other surfaces of the light guide than the light exit surface, is at least partly reflected back into the light guide and may thus be recycled and eventually emitted through the light exit surface. This in turn leads to an increased light output and thus intensity gain.

In an embodiment the at least three side light input surfaces and the light exit surface extend perpendicular to one another. Thereby a light emitting device is provided which has a particularly simple geometry and which is very simple and fast to produce and to align properly with the light sources.

In an embodiment the luminescent light guide is a garnet. Garnets are preferred as they show high photochemical stability and thus provide for a particularly durable light emitting device.

In an embodiment the light emitting device further comprises a heat sink adjacent to the light guide.

By providing a heat sink element adjacent to the light guide a considerable improvement in the dissipation of heat away from the light guide is obtained, thus raising the maximum obtainable output light intensity of the light emitting device considerably. Furthermore, the adverse effects on the optical performance due to e.g. thermal quenching are lowered significantly or even eliminated, which provides for a considerably more reliable light emitting device with an improved optical performance. For example, the heat sink may be arranged at a side surface while on each of the remaining at least three side surfaces at least one light source is arranged.

In an embodiment the light guide comprises an outcoupling structure at the light exit surface. By providing such an outcoupling structure, a light emitting device is provided with which light emitted by the light source may be coupled out of the light guide in a particularly efficient manner and with particularly low or possibly no coupling losses.

In an embodiment the outcoupling structure is arranged in thermal contact with the heat sink. Thereby a light emitting device is provided with a configuration providing for an even more improved dissipation of heat away from the light guide is obtained, thus raising the maximum obtainable output light intensity of the light emitting device even more.

In an embodiment the light guide comprises a cross-sectional shape chosen from the group comprising triangular, rectangular, square, trapezoid, polygonal shapes and combinations thereof. This embodiment provides for a parameter usable for obtaining different geometrical configurations of the light emitting device and/or of the size and shape of the beam of light emitted by the light emitting device.

In an embodiment the first spectral distribution of the light emitted by the light sources is comprised in the range from 200 nm to 500 nm. Thereby a light emitting device is provided which is particularly suitable for providing a white light output of a high quality and intensity.

The invention further relates to a lamp, luminaire, automotive lighting device or digital projection device comprising a light emitting device according to the invention.

It is noted that the invention relates to all possible combinations of features recited in the claims.

### BRIEF DESCRIPTION OF THE DRAWINGS

This and other aspects of the present invention will now be described in more detail, with reference to the appended drawings showing embodiment(s) of the invention.
Fig. 1 shows side view of a light guide which is provided with an optical element at an exit surface.
Fig. 2 shows a side view of a lighting system with a light guide and additional light sources and which is provided with a filter and a dichroic optical element.
Fig. 3A and 3B show light guides provided with a heat sink element arranged adjacent a surface of the light guide.
Fig.4 shows a perspective view of a first embodiment of a light emitting device according to the invention.
Fig. 5 shows a top view of the light emitting device according to Fig. 4.
Fig. 6 shows a cross sectional view along the line XI-XI of the light emitting device according to Fig. 4.
Fig. 7 shows a cross sectional view along the line XII-XII of the light emitting device according to Fig. 4.
Fig. 8 shows a side view of an embodiment of a light emitting device according to the invention.
Fig. 9 shows a side view of an embodiment of a light emitting device according to the invention.
Fig. 10 shows a top view of an embodiment of a light emitting device according to the invention used in a practical experiment.
Fig. 11 shows a graph illustrating the gain in light output as a function of the number of LEDs provided in a light emitting device according to the invention.

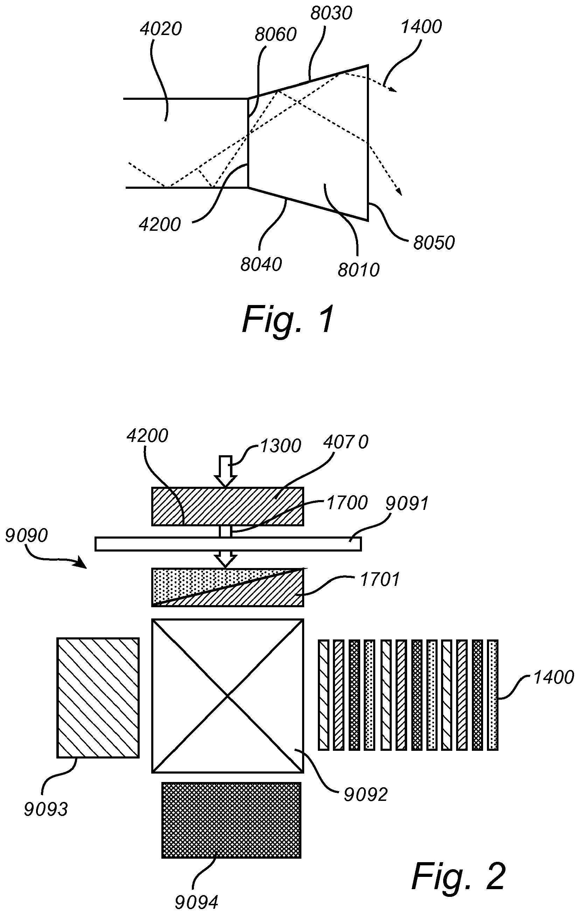

As illustrated in the figures, the sizes of layers, elements and regions are exaggerated for illustrative purposes and, thus, are provided to illustrate the general structures of embodiments of the present invention. Like reference numerals refer to like elements throughout, such that e.g. a light emitting device according to the invention is generally denoted 1, whereas different specific embodiments thereof are denoted by adding 01, 02, 03 and so forth to the general reference numeral. With regard to Figs. 1 to 3 showing a number of features and elements which may be added to any one of the embodiments of a light emitting device according to the invention as set forth further below, generally "00" has been added to all elements except those specific to one of these Figures.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

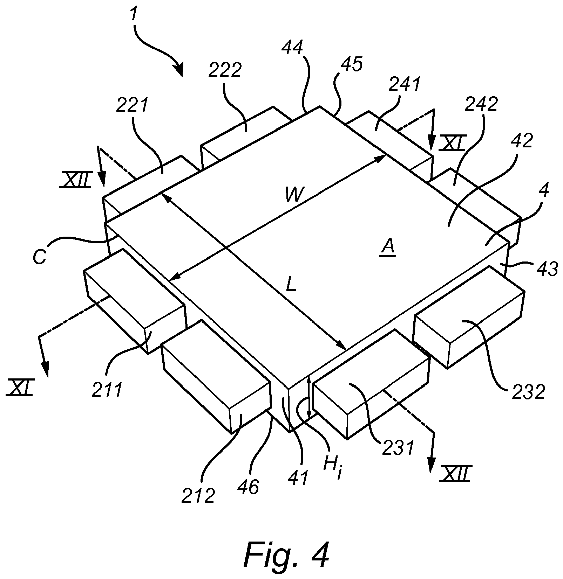

The following description will start with general considerations regarding applications, suitable light sources and suitable materials for various elements and features of a light emitting device according to the invention. For this purpose a number of features and elements which may be added to any one of the embodiments of a light emitting device according to the invention as set forth further below will be described with reference to Figs. 1 to 3. The specific embodiments of a light emitting device according to the invention will be described in detail with reference to Figs. 4 to 11.

A light emitting device according to the invention may be used in applications including but not being limited to a lamp, a light module, a luminaire, a spot light, a flash light, a projector, a digital projection device, automotive lighting such as e.g. a headlight or a taillight of a motor vehicle, arena lighting, theater lighting and architectural lighting.

Light sources which are part of the embodiments according to the invention as set forth below, are adapted for, in operation, emitting light with a first spectral distribution. This light is subsequently coupled into a light guide or waveguide. The light guide or waveguide may convert the light of the first spectral distribution to another spectral distribution and guides the light to an exit surface. The light source may in principle be any type of point light source, but is in an embodiment a solid state light source such as a Light Emitting Diode (LED), a Laser Diode or Organic Light Emitting Diode (OLED), a plurality of LEDs or Laser Diodes or OLEDs or an array of LEDs or Laser Diodes or OLEDs, or a combination of any of these. The LED may in principle be an LED of any color, or a combination of these, but is in an embodiment a blue light source producing light source light in the blue color-range which is defined as a wavelength range of between 380 nm and 495 nm. In another embodiment, the light source is an UV or violet light source, i.e. emitting in a wavelength range of below 420 nm. In case of a plurality or an array of LEDs or Laser Diodes or OLEDs, the LEDs or Laser Diodes or OLEDs may in principle be LEDs or Laser Diodes or OLEDs of two or more different colors, such as, but not limited to, UV, blue, green, yellow or red.

The light source may be a red light source, i.e. emitting in a wavelength range of e.g. between 600 nm and 800 nm. Such a red light source may be e.g. a light source of any of the above mentioned types directly emitting red light or provided with a phosphor suitable for converting the light source light to red light. This embodiment is particularly advantageous in combination with a light guide adapted for converting the light source light to infrared (IR) light, i.e. light with a wavelength of more than about 800 nm and in a suitable embodiment with a peak intensity in the range from 810 to 850 nm. In an embodiment such a light guide comprises an IR emitting phosphor. A light emitting device with these characteristics is especially advantageous for use in night vision systems, but may also be used in any of the applications mentioned above.

Another example is combination of a first, red light source emitting light in a wavelength range between 480nm and 800 nm and coupling this light into a luminescent rod or waveguide, and a second light source, emitting blue or UV or violet light, i.e. with a wavelength smaller than 480 nm, and also coupling its emitted light into the luminescent waveguide or rod. The light of the second light source is converted by the luminescent waveguide or rod to a wavelength range between 480nm and 800nm, and the light of the first light source coupled into the luminescent waveguide or rod will not be converted. In other words, the second light source emits UV, violet or blue light and is subsequently converted by the luminescent concentrator into light in the green-yellow-orange-red spectral region. In another embodiment the first light source emits in a wavelength range between 500nm and 600nm, and the light of the second light source is converted by the luminescent waveguide or rod to a wavelength range between 500nm and 600nm. In another embodiment the first light source emits in a wavelength range between 600nm and 750nm, and the light of the second light source is converted by the luminescent waveguide or rod to a wavelength range between 600nm and 750nm. In an embodiment the light of the first light source is coupled into the luminescent waveguide or rod at another surface, for example a surface opposite to an exit surface of the light, than a surface where the light of the second light source is coupled into the luminescent waveguide or rod. These embodiments provide a luminescent waveguide or rod emitting in the red light range with an increased brightness.

Transparent light guides may in embodiments comprise a transparent substrate on which a plurality of light sources, for example LEDs, are grown epitaxially. The substrate is in embodiments a single crystal substrate, such as for example a sapphire substrate. The transparent growth substrate of the light sources is in these embodiments the light concentrating light guide.

Suitable materials for the light guides as set forth below according to embodiments of the invention are sapphire, polycrystalline alumina and/or undoped transparent garnets such as YAG, LuAG having a refractive index of n = 1.7. An additional advantage of this material (above e.g. glass) is that it has a good thermal conductivity, thus diminishing local heating. Other suitable materials include, but are not limited to, glass, quartz and transparent polymers. In other embodiments the light guide material is lead glass. Lead glass is a variety of glass in which lead replaces the calcium content of a typical potash glass and in this way the refractive index can be increased. Ordinary glass has a refractive index of n = 1.5, while the addition of lead produces a refractive index ranging up to 1.7.

The light guides as set forth below according to embodiments of the invention may comprise a suitable luminescent material for converting the light to another spectral distribution. Suitable luminescent materials include inorganic phosphors, such as doped YAG, LuAG, organic phosphors, organic fluorescent dyes and quantum dots which are highly suitable for the purposes of embodiments of the present invention as set forth below.

Quantum dots are small crystals of semiconducting material generally having a width or diameter of only a few nanometers. When excited by incident light, a quantum dot emits light of a color determined by the size and material of the crystal. Light of a particular color can therefore be produced by adapting the size of the dots. Most known quantum dots with emission in the visible range are based on cadmium selenide (CdSe) with a shell such as cadmium sulfide (CdS) and zinc sulfide (ZnS). Cadmium free quantum dots such as indium phosphide (InP), and copper indium sulfide (CuInS₂) and/or silver indium sulfide (AgInS₂) can also be used. Quantum dots show very narrow emission band and thus they show saturated colors. Furthermore the emission color can easily be tuned by adapting the size of the quantum dots. Any type of quantum dot known in the art may be used in embodiments of the present invention as set forth below. However, it may be preferred for reasons of environmental safety and concern to use cadmium-free quantum dots or at least quantum dots having very low cadmium content.

Organic fluorescent dyes can be used as well. The molecular structure can be designed such that the spectral peak position can be tuned. Examples of suitable organic fluorescent dyes materials are organic luminescent materials based on perylene derivatives, for example compounds sold under the name Lumogen® by BASF. Examples of suitable compounds include, but are not limited to, Lumogen® Red F305, Lumogen® Orange F240, Lumogen® Yellow F083, and Lumogen® F170.

The luminescent material may also be an inorganic phosphor. Examples of inorganic phosphor materials include, but are not limited to, cerium (Ce) doped YAG (Y₃Al₅O₁₂) or LuAG (Lu₃A₁₅O₁₂). Ce doped YAG emits yellowish light, whereas Ce doped LuAG emits yellow-greenish light. Examples of other inorganic phosphors materials which emit red light may include, but are not limited to ECAS and BSSN; ECAS being Ca₁₋ₓAlSiN₃:Eux wherein 0<x≤1, in other embodiments 0<x≤0.2; and BSSN being Ba_{2-x-z}MₓSi_{5-y}AlyN_{8-y}O_{y}:Eu_{z} wherein M represents Sr or Ca, 0<x≤1, 0<y≤4, and 0.0005≤z≤0.05, and in embodiments 0≤x≤0.2.

In embodiments of the invention as set forth below, the luminescent material is made of material selected from the group comprising (M<I>_{(1-x-y)}M<II>ₓM<III>_{y})₃ (M<IV>_{(1-z)}M<V>_{z})₅O₁₂ where M<I> is selected from the group comprising Y, Lu or mixtures thereof, M<II> is selected from the group comprising Gd, La, Yb or mixtures thereof, M<III> is selected from the group comprising Tb, Pr, Ce, Er, Nd, Eu or mixtures thereof, M<IV> is Al, M<V> is selected from the group comprising Ga, Sc or mixtures thereof, and 0<x≤1, 0<y≤0.1, 0<z<1, (M<I>_{(1-x-y)}M<II>ₓM<III>_{y})₂O₃ where M<I> is selected from the group comprising Y, Lu or mixtures thereof, M<II > is selected from the group comprising Gd, La, Yb or mixtures thereof, M<III > is selected from the group comprising Tb, Pr, Ce, Er, Nd, Eu, Bi, Sb or mixtures thereof, and 0<x≤1, 0<y≤0.1, (M<I>_{(1-x-y)}M<II>ₓM<III>_{y}) S_{(1-z)} Se where M<I> is selected from the group comprising Ca, Sr, Mg, Ba or mixtures thereof, M<II> is selected from the group comprising Ce, Eu, Mn, Tb, Sm, Pr, Sb, Sn or mixtures thereof, M<III> is selected from the group comprising K, Na, Li, Rb, Zn or mixtures thereof, and 0<x≤0.01, 0<y≤0.05, 0≤z<1, (M<I>_{(1-x-y)}M<II>ₓM<III>_{y})O where M<I> is selected from the group comprising Ca, Sr, Mg, Ba or mixtures thereof, M<II> is selected from the group comprising Ce, Eu, Mn, Tb, Sm, Pr or mixtures thereof, M<III> is selected from the group comprising K, Na, Li, Rb, Zn or mixtures thereof, and 0<x≤0.1, 0<y≤0.1, (M<I>₍₂₋ₓ₎M<II>ₓM<III>₂)O₇ where M<I> is selected from the group comprising La, Y, Gd, Lu, Ba, Sr or mixtures thereof, M<II> is selected from the group comprising Eu, Tb, Pr, Ce, Nd, Sm, Tm or mixtures thereof, M<III> is selected from the group comprising Hf, Zr, Ti, Ta, Nb or mixtures thereof, and 0<x≤1, (M<I>₍₁₋ₓ₎M<II>ₓM<III>_{(1-y)}M<IV>_{y})O₃ where M<I> is selected from the group comprising Ba, Sr, Ca, La, Y, Gd, Lu or mixtures thereof, M<II> is selected from the group comprising Eu, Tb, Pr, Ce, Nd, Sm, Tm or mixtures thereof, M<III> is selected from the group comprising Hf; Zr, Ti, Ta, Nb or mixtures thereof, and M<IV> is selected from the group comprising Al, Ga, Sc, Si or mixtures thereof, and 0<x≤0.1, 0<y≤0.1, or mixtures thereof.

Other suitable luminescent materials are Ce doped Yttrium aluminum garnet (YAG, Y₃Al₅O₁₂) and Lutetium-Aluminum-Garnet (LuAG). A luminescent light guide may comprise a central emission wavelength within a blue color-range or within a green color-range or within a red color-range. The blue color-range is defined between 380 nanometer and 495 nanometer, the green color-range is defined between 495 nanometer and 590 nanometer, and the red color-range is defined between 590 nanometer and 800 nanometer.

A selection of phosphors which may be used in embodiments is given in table 1 below along with the maximum emission wavelength.

**Table 1**

| **Phosphor** | **Maximum emission wavelength [nm]** |
|---|---|
| CaGa₂S₄:Ce | 475 |
| SrGa₂S₄:Ce | 450 |
| BaAl₂S₄:Eu | 470 |
| CaF₂:Eu | 435 |
| Bi₄Si₃O₁₂:Ce | 470 |
| Ca₃Sc₂Si₃O₁₂:Ce | 490 |

The light guides as set forth below according to embodiments of the invention may comprise regions with a different density of suitable luminescent material for converting the light to another spectral distribution. In an embodiment a transparent light guide comprises two parts adjacent to each other and only one of which comprises a luminescent material and the other part is transparent or has a relatively low concentration of luminescent material. In another embodiment the light guide comprises yet another, third part, adjacent to the second part, which comprises a different luminescent material or a different concentration of the same luminescent material. The different parts may be integrally formed thus forming one piece or one light guide. In an embodiment a partially reflecting element may be arranged between the different parts of the light guide, for example between the first part and the second part. The partially reflecting element is adapted for transmitting light with one specific wavelength or spectral distribution and for reflecting light with another, different, specific wavelength or spectral distribution. The partially reflecting element may thus be a dichroic element such as a dichroic mirror.

In another embodiment (not shown) a plurality of wavelength converting regions of luminescent material is arranged at the light input surface of a transparent light guide above or on top of a plurality of light sources, such as LEDs. Thus the surface area of each of the plurality of wavelength converting regions correspond to the surface area of each of the plurality of light sources such that light from the light sources is coupled into the transparent light guide via the regions of luminescent material. The converted light is then coupled into the transparent part of the light guide and subsequently guided to the light exit surface of the light guide. The wavelength converting regions may be arranged on the light input surface or they may be formed in the light guide. The wavelength converting regions may form part of a homogeneous layer arranged on or in the light guide at the light input surface. Parts of the homogeneous layer extending between two neighboring wavelength converting regions may be transparent and may additionally or alternatively have the same refractive index as the wavelength converting regions. The different wavelength converting regions may comprise mutually different luminescent materials. The distance between the light sources and the luminescent regions may be below 2 mm, below 1 mm or below 0.5 mm.

In embodiments of the light emitting device according to the invention as set forth below a coupling structure or a coupling medium may be provided for efficiently coupling the light emitted by the light source into the light guide. The coupling structure may be a refractive structure having features, such as e.g. protrusions and recesses forming a wave shaped structure. The typical size of the features of the coupling structure is 5 µm to 500 µm. The shape of the features may be e.g. hemispherical (lenses), prismatic, sinusoidal or random (e.g. sand-blasted). By choosing the appropriate shape, the amount of light coupled into the light guide can be tuned. The refractive structures may be made by mechanical means such as by chiseling, sand blasting or the like. Alternatively, the refractive structures may be made by replication in an appropriate material, such as e.g. polymer or sol-gel material. Alternatively, the coupling structure may be a diffractive structure, where the typical size of the features of the diffractive coupling structure is 0.2 µm to 2 µm. The diffraction angles θᵢₙ inside the light guide are given by the grating equation λ/Λ = nᵢₙ •sinθᵢₙ - nₒᵤₜ •sinθₒᵤₜ, where λ is the wavelength of LED light, A is the grating period, nᵢₙ and nₒᵤₜ are the refractive indices inside and outside the light guide, θᵢₙ and θₒᵤₜ are the diffraction angle inside and the incident angle outside the light guide, respectively. If we assume the same refractive index nₒᵤₜ =1 for low-index layer and coupling medium, we find, with the condition for total internal reflection nᵢₙ sinθiₙ = nₒᵤₜ, the following condition: λ/Λ = 1 - sinθₒᵤₜ, i.e. A = λ for normal incidence θₒᵤₜ = 0. Generally, not all other angles θₒᵤₜ are diffracted into the light guide. This will happen only if its refractive index nᵢₙ is high enough. From the grating equation it follows that for the condition nᵢₙ ≥ 2 all angles are diffracted if A = λ. Also other periods and refractive indices may be used, leading to less light that is diffracted into the light guide. Furthermore, in general a lot of light is transmitted (0^{th} order). The amount of diffracted light depends on the shape and height of the grating structures. By choosing the appropriate parameters, the amount of light coupled into the light guide can be tuned. Such diffractive structures most easily are made by replication from structures that have been made by e.g. e-beam lithography or holography. The replication may be done by a method like soft nano-imprint lithography. The coupling medium may e.g. be air or another suitable material.

In an embodiment the light emitting device comprises a rotatable phosphor wheel, and it further comprises a coupling element arranged between the light guide, as set forth below according to embodiments of the invention, and the phosphor wheel. The phosphor wheel, which is rotating in a rotation direction about an axis of rotation, is used for converting the light exiting from the light guide to light having another spectral distribution, such as red and/or green light. It is noted that in principle any combination of colors of the light exiting from the light guide and the light converted by the phosphor wheel is feasible.

In embodiments the phosphor wheel is used in the transparent mode, i.e. incident light enters the phosphor wheel at one side, is transmitted through the phosphor wheel and emitted from an opposite side thereof forming the light exit surface. Alternatively, the phosphor wheel may be used in the reflective mode such that light is emitted from the same surface as the surface through which it enters the phosphor wheel.

The phosphor wheel may comprise only one phosphor throughout. Alternatively, the phosphor wheel may also comprise segments without any phosphor such that also part of the light may be transmitted without being converted. In this way sequentially other colors can be generated. In another alternative, the phosphor wheel may also comprise multiple phosphor segments, e.g. segments of phosphors emitting yellow, green and red light, respectively, such as to create a multi-colored light output. In yet another alternative, the light emitting device may be adapted for generating white light by employing a pixelated phosphor-reflector pattern on the phosphor wheel.

In an embodiment the coupling element is an optical element suitable for collimating the light incident on the phosphor wheel, but it may also be a coupling medium or a coupling structure such as e.g. the coupling medium or the coupling structure described above. The light emitting device may furthermore comprise additional lenses and/or collimators.

Fig. 1 shows a light guide 4020 which comprises an optical element 8010 arranged with a light input facet 8060 in optical connection with a light exit surface 4200 of the light guide 4020. The optical element 8010 is made of a material having a high refractive index, in an embodiment a refractive index which is equal to or higher than that of the light guide 4020, and comprises a quadrangular cross section and two tapered sides 8030 and 8040. The tapered sides 8030 and 8040 are inclined outwardly from the light exit surface 4200 of the light guide 4020 such that the light exit facet 8050 of the optical element 8010 has a larger surface area than both the light input facet 8060 and the light exit surface 4200 of the light guide 4020. The optical element 8010 may alternatively have more than two, particularly four, tapered sides. In an alternative, the optical element 8010 has a circular cross section and one circumferential tapered side. With such an arrangement light will be reflected at the inclined sides 8030 and 8040 and has a large chance to escape if it hits the light exit facet 8050, as the light exit facet 8050 is large compared to the light input facet 8060. The shape of the sides 8030 and 8040 may also be curved and chosen such that all light escapes through the light exit facet 8050.

The optical element may also be integrally formed from the light guide 4020, for example by shaping a part of the light guide such that a predetermined optical element is formed at one of the ends of the light guide. The optical element may for example have the shape of a collimator, or may have a cross-sectional shape of a trapezoid and in an embodiment outside surfaces of the trapezoid shape are provided with reflective layers. Thereby the received light may be shaped such as to comprise a larger spot size while simultaneously minimizing the loss of light through other surfaces than the light exit surface, thus also improving the intensity of the emitted light. In another embodiment the optical element has the shape of a lens array, for example convex or concave lenses or combinations thereof. Thereby the received light may be shaped such as to form focused light, defocused light or a combination thereof. In case of an array of lenses it is furthermore feasible that the emitted light may comprise two or more separate beams each formed by one or more lenses of the array. In more general terms, the light guide may thus have differently shaped parts with different sizes. Thereby a light guide is provided with which light may be shaped in that any one or more of the direction of emission of light from the light exit surface, the beam size and beam shape of the light emitted from the light exit surface may be tuned in a particularly simple manner, e.g. by altering the size and/or shape of the light exit surface. Thus, a part of the light guide functions as an optical element.

The optical element may also be a light concentrating element (not shown) arranged at the light exit surface of the light guide. The light concentrating element comprises a quadrangular cross section and two outwardly curved sides such that the light exit surface of the light concentrating element has a larger surface area than the light exit surface of the light guide. The light concentrating element may alternatively have more than two, particularly four, tapered sides. The light concentrating element may be a compound parabolic light concentrating element (CPC) having parabolic curved sides. In an alternative, the light concentrating element has a circular cross section and one circumferential tapered side. If, in an alternative, the refractive index of the light concentrating element is chosen to be lower than that of the light guide (but higher than that of air), still an appreciable amount of light can be extracted. This allows for a light concentrating element which is easy and cheap to manufacture compared to one made of a material with a high refractive index. For example, if the light guide has a refractive index of n = 1.8 and the light concentrating element has a refractive index of n = 1.5 (glass), a gain of a factor of 2 in light output may be achieved. For a light concentrating element with a refractive index of n = 1.8, the gain would be about 10 % more. Actually, not all light will be extracted since there will be Fresnel reflections at the interface between the optical element or the light concentrating element and the external medium, generally being air. These Fresnel reflections may be reduced by using an appropriate anti-reflection coating, i.e. a quarter-lambda dielectric stack or moth-eye structure. In case the light output as function of position over the light exit facet is inhomogeneous, the coverage with anti-reflection coating might be varied, e.g. by varying the thickness of the coating.

One of the interesting features of a CPC is that the etendue (= n² x area x solid angle, where n is the refractive index) of the light is conserved. The shape and size of the light input facet of the CPC can be adapted to those of the light exit surface of the light guide and/or vice versa. A large advantage of a CPC is that the incoming light distribution is transformed into a light distribution that fits optimally to the acceptable etendue of a given application. The shape of the light exit facet of the CPC may be e.g. rectangular or circular, depending on the desires. For example, for a digital projector there will be requirements to the size (height and width) of the beam, as well as for the divergence. The corresponding etendue will be conserved in a CPC. In this case it will be beneficial to use a CPC with rectangular light input and exit facets having the desired height/width ratio of the display panel used. For a spot light application, the requirements are less severe. The light exit facet of the CPC may be circular, but may also have another shape (e.g. rectangular) to illuminate a particularly shaped area or a desired pattern to project such pattern on screens, walls, buildings, infrastructures etc.. Although CPCs offer a lot of flexibility in design, their length can be rather large. In general, it is possible to design shorter optical elements with the same performance. To this end, the surface shape and/or the exit surface may be adapted, e.g. to have a more curved exit surface such as to concentrate the light. One additional advantage is that the CPC can be used to overcome possible aspect ratio mismatches when the size of the light guide is restrained by the dimensions of the LED and the size of the light exit facet is determined by the subsequent optical components. Furthermore, it is possible to place a mirror (not shown) partially covering the light exit facet of the CPC, e.g. using a mirror which has a 'hole' near or in its center. In this way the exit plane of the CPC is narrowed down, part of the light is being reflected back into the CPC and the light guide, and thus the exit etendue of the light would be reduced. This would, naturally, decrease the amount of light that is extracted from the CPC and light guide. However, if this mirror has a high reflectivity, like e.g. Alanod 4200AG, the light can be effectively injected back into the CPC and light guide, where it may be recycled by TIR. This will not change the angular distribution of the light, but it will alter the position at which the light will hit the CPC exit plane after recycling thus increasing the luminous flux. In this way, part of the light, that normally would be sacrificed in order to reduce the system etendue, can be re-gained and used to increase for example the homogeneity. This is of major importance if the system is used in a digital projection application. By choosing the mirror in the different ways, the same set of CPC and light guide can be used to address systems using different panel sizes and aspect ratio's, without having to sacrifice a large amount of light. In this way, one single system can be used for various digital projection applications.

By using any one of the above structures described with reference to Fig. 1, problems in connection with extracting light from the high-index light guide material to a low-index material like air, particularly related to the efficiency of the extraction, are solved.

Fig. 2 shows a side view of a lighting system, e.g. a digital projector, with a light guide 4070 which is adapted for converting incident light 1300 in such a way that the emitted light 1700 is in the yellow and/or orange wavelength range, i.e. roughly in the wavelength range of 560 nm to 600 nm. The light guide 4070 may e.g. be provided as a transparent garnet made of ceramic materials such as Ce-doped (Lu,Gd)₃Al₅O₁₂, (Y,Gd)₃Al₅O₁₂ or (Y,Tb)₃Al₅O₁₂. With higher Ce-content and/or higher substitution levels of e.g. Gd and/or Tb in favor of Ce, the spectral distribution of the light emitted by the light guide can be shifted to higher wavelengths. In an embodiment, the light guide 4070 is fully transparent.

At the light exit surface 4200 an optical element 9090 is provided. The optical element 9090 comprises a filter 9091 for filtering the light 1700 emitted from the light guide 4070 such as to provide filtered light 1701, at least one further light source 9093, 9094 and an optical component 9092 adapted for combining the filtered light 1701 and the light from the at least one further light source 9093, 9094 such as to provide a common light output 1400. The filter 9091 may be an absorption filter or a reflective filter, which may be fixed or switchable. A switchable filter may e.g. be obtained by providing a reflective dichroic mirror, which may be low-pass, band-pass or high-pass according to the desired light output, and a switchable mirror and placing the switchable mirror upstream of the dichroic mirror seen in the light propagation direction. Furthermore, it is also feasible to combine two or more filters and/or mirrors to select a desired light output. The filter 9091 shown in Fig. 2 is a switchable filter enabling the transmission of unfiltered yellow and/or orange light or filtered light, particularly and in the embodiment shown filtered red light, according to the switching state of the filter 9091. The spectral distribution of the filtered light depends on the characteristics of the filter 9091 employed. The optical component 9092 as shown may be a cross dichroic prism also known as an X-cube or it may in an alternative be a suitable set of individual dichroic filters.

In the embodiment shown two further light sources 9093 and 9094 are provided, the further light source 9093 being a blue light source and the further light source 9094 being a green light source. Other colors and/or a higher number of further light sources may be feasible too. One or more of the further light sources may also be light guides according to embodiments of the invention as set forth below. A further option is to use the light filtered out by the filter 9091 as a further light source. The common light output 1400 is thus a combination of light 1701 emitted by the light guide 4070 and filtered by the filter 9091 and light emitted by the respective two further light sources 9093 and 9094. The common light output 1400 may advantageously be white light.

The solution shown in Fig. 2 is advantageous in that it is scalable, cost effective and easily adaptable according to the requirements for a given application of a light emitting device according to embodiments of the invention.

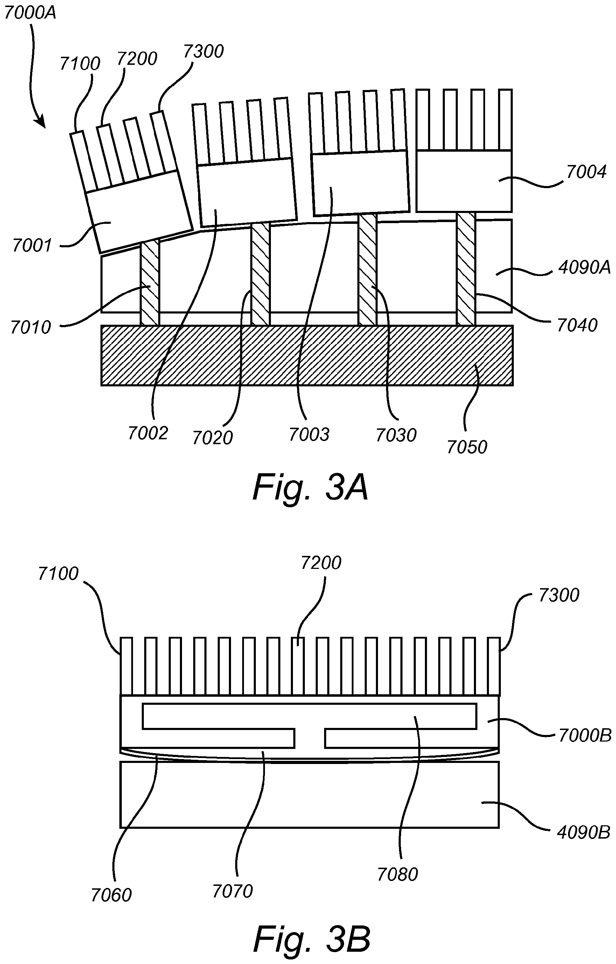

Figs. 3A and 3B show a side view of a light guide 4090A and a light guide 4090B, respectively, that comprise a heat sink element 7000A, 7000B, respectively, arranged on one of the surfaces of the light guide 4090A, 4090B, respectively, different from the light input surface, in embodiments at a distance of about 30 µm or less therefrom. Irrespective of the embodiment the respective heat sink element 7000A, 7000B comprises fins 7100, 7200, 7300 for improved heat dissipation, the fins, however, being optional elements. Irrespective of the embodiment the respective heat sink element 7000A, 7000B is adapted to be conformable to the surface shape of the light guide, and is thus adapted for providing a conformal thermal contact over the whole contact area with the light guide. Thereby an increased thermal contact area and thus an improved cooling of the light guide is obtained and the existing tolerance limits on the positioning of the heat sink element become less critical.

Fig. 3A shows that heat sink element 7000A comprises a plurality of heat sink parts, here four heat sink parts 7001, 7002, 7003 and 7004, one or more of which, here all four, may be provided with fins. Obviously, the more heat sink parts the heat sink element 7000A comprises, the more precisely the heat sink element 7000 may be conformed to the surface of the light guide. Each heat sink part 7001, 7002, 7003, 7004 is adapted for providing a conformal thermal contact over the whole contact area with the light guide. The heat sink parts may be arranged in mutually different distances from the surface of the light guide. Furthermore, the heat sink element 7000A comprises a common carrier 7050 to which the heat sink parts 7001, 7002, 7003 and 7004 are attached individually by means of attachment elements 7010, 7020, 7030 and 7040, respectively. Alternatively each heat sink part may be assigned its own carrier. It is noted that these elements are optional.

Fig. 3B shows that heat sink element 7000B comprises a bottom part 7060 adapted to be conformable to the shape of the surface of the light guide 4090B at which it is to be arranged. The bottom part 7060 is flexible and may e.g. be a thermally conductive metal layer such as a copper layer. The heat sink element 7000B further comprises a thermally conductive layer 7070 arranged between the bottom element 7060 and the remainder of the heat sink element 7000B for improved flexibility and conformability of the heat sink element 7000B. The thermally conductive layer 7070 may e.g. be a thermally conductive fluid or paste. The thermally conductive layer 7070 is in an embodiment highly reflective and/or comprises a highly reflective coating. The heat sink element 7000B further comprises a fluid reservoir 7080 arranged inside the heat sink element 7000B for generating a fluid flow for improved heat dissipation. In an alternative, the fluid reservoir 7080 may also be arranged externally on the heat sink element 7000B, e.g. extending along a part of or the whole external periphery of the heat sink element 7000B. The fluid flow may be enhanced by means of a pump. It is noted that the conductive layer 7070 and the fluid reservoir 7080 are optional elements.

Irrespective of the embodiment, the heat sink element 7000A, 7000B may be made of a material selected from copper, aluminum, silver, gold, silicon carbide, aluminum nitride, boron nitride, aluminum silicon carbide, beryllium oxide, silicon-silicon carbide, aluminum silicon carbide, copper tungsten alloys, copper molybdenum carbides, carbon, diamond, graphite, and combinations of two or more thereof. Furthermore, a heat sink element combining features of the embodiments described above is feasible. Also, it is feasible to arrange a heat sink element according to any of the above embodiments at more than one surface of the light guide 4090A or 4090B.

Finally it is noted that the provision of a heat sink element as described above is especially advantageous in a light emitting device employing a light source emitting in the red wavelength range and/or being adapted for emitting light in the infrared wavelength range, e.g. by comprising an IR emitting phosphor.

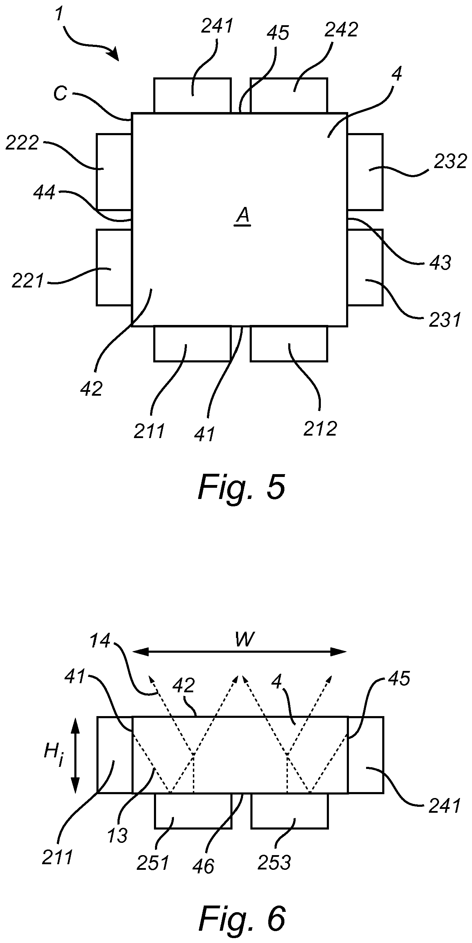

Fig. 4 shows a perspective view of a light emitting device 1 according to a first and general embodiment of the invention. Fig. 5 shows a top view of the light emitting device 1 according to Fig. 4. The light emitting device 1 generally comprises a plurality of light sources 211, 212, 221, 222, 231, 232, 241, 242 each comprising at least one solid state light source such as a LED or laser diode and a light guide 4 having at least one side light input surface 41 and a light output surface 42. Suitable types of LEDs or laser diodes are described above.

The light guide 4 is shown shaped generally as a square plate having four side light input surfaces, namely a first, a second, a third and a fourth light input surface 41, 43, 44 and 45, and a light exit surface 42 extending at an angle different from zero with respect to each of the four side light input surfaces 41, 43, 44 and 45 such that the light exit surface 42 is a top surface of the second light guide 4. The second light guide 4 further comprises a bottom surface 46 extending parallel to and opposite the light exit surface 42.

It is noted that embodiment in which the angle between the side light input surface 41 and the light exit surface 42 are less than 90°, equal to 90° and larger than 90° are all feasible.

Each of the four side light input surfaces 41, 43, 44 and 45 is, in this embodiment, associated with two light sources such that the first side light input surface 41 is associated with light sources 211 and 212, the second side light input surface 43 is associated with light sources 231 and 232, the third side light input surface 44 is associated with light sources 221 and 222 and the fourth side light input surface 45 is associated with light sources 241 and 242. The respective light sources are arranged adjacent to and in optical contact with the associated side light input surface of the light guide 4.

In alternative embodiments each light input surface may be associated with in principle any other number of light sources or even with an array of light sources. Also, the respective light input surfaces need not necessarily be associated with the same number of light sources, but may be associated with one or more different numbers of light sources.

In alternative embodiments, and depending on the geometry of the light guide, the light guide 4 may comprise another number of side light input surfaces than four, e.g. three, five or even more side light input surfaces.

Surfaces of the light guide 4 other than the light exit surface 42 and which are not being associated with any light sources and thus not being used as light input surfaces may be provided with a reflective layer such as to eliminate light losses which otherwise may occur through these surfaces and/or may be provided with a heat sink.

The light guide 4 may also be bar or rod shaped or be shaped as a rectangular plate. Furthermore, the light guide 4 may in principle have any feasible cross sectional shape including but not limited to triangular, rectangular, square, trapezoid, polygonal and combinations thereof.

Alternative configurations of the light emitting device according to the invention in which the light exit surface 42 and the surface 46 are mutually opposite side surfaces and the side light input surface 41 is a top surface or a bottom surface are also feasible.

Furthermore, the light guide 4 comprises a transparent material, a luminescent material, a garnet, a light concentrating material or a combination thereof, suitable materials and garnets being described above. For example, the light guide may comprise a material with a transparency of any one of at least 50 %, at least 60 % and at least 70 %. Preferably, however, the light guide 4 is a transparent light guide comprising a material adapted for converting light with one spectral distribution to light with another spectral distribution. The material adapted for converting light with one spectral distribution to light with another spectral distribution may be arranged at a surface of the light guide 4 or it may be embedded or incorporated in the light guide 4.

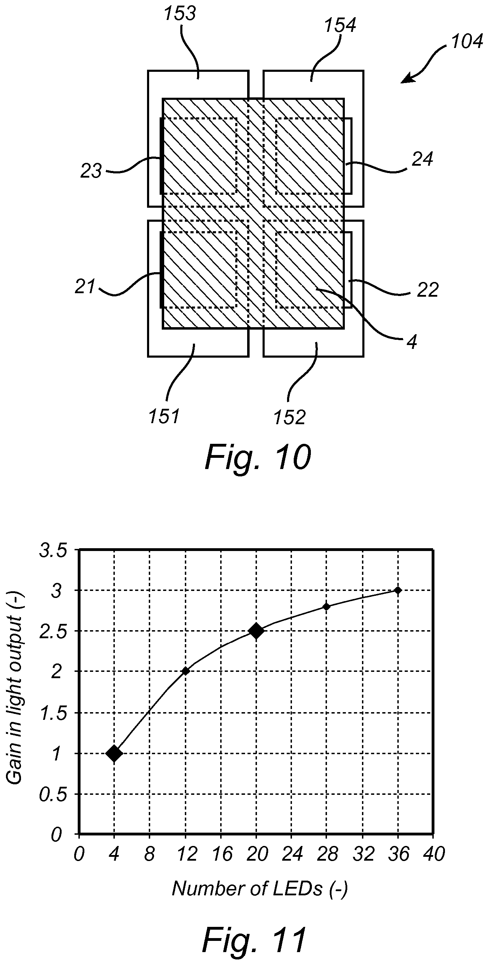

The light sources 211, 212, 221, 222, 231, 232, 241, 242 are arranged directly on the respective first, second, third and fourth side light input surfaces 41, 43, 44, 45, for example by means of an optical adhesive. In other embodiments (cf. e.g. Fig. 10) the light sources may be arranged on a base or substrate 151, 152, 153, 154. The base or substrate 151, 152, 153, 154 may be provided in the form of a heat sink, preferably made of a metal such as copper, iron or aluminum. The heat sink may comprise fins (not shown) for improved heat dissipation. It is noted that in other embodiments the base or substrate need not be a heat sink. Also, as the base or substrate is not essential it may in yet other embodiments even be omitted.

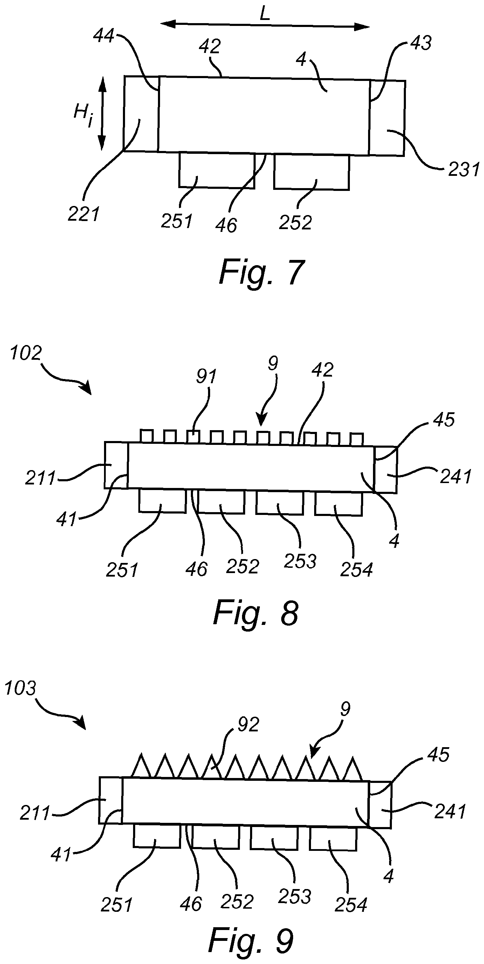

Turning now to Figs. 6 and 7 cross sectional views of the light emitting device 1 according to Fig. 4 and seen in two mutually perpendicular directions XI-XI and XII-XII illustrated in Fig. 4 are shown.

As may be seen in both Fig. 6 and Fig. 7 four further light sources 251, 252, 253 and 254 are arranged on and in optical connection with the bottom surface 46. Of the four further light sources 251, 252, 253 and 254 associated with the bottom surface three are visible in the Figures, namely the further light sources 251, 252 and 253. Thus, the bottom surface 46 is in the embodiment shown a light input surface which extends parallel to the light exit surface 42.

The light exit surface 42 furthermore has an area A and a circumference C, and the side light input surfaces have a height Hᵢ extending at an angle different from zero, particularly extending perpendicular, to a plane in which the light exit surface 42 extends. The circumference C of the light exit surface 42 is dimensioned to be more than four times larger than the height H;.

Generally, the area of the side light input surfaces is generally dimensioned to be less than four times the area A of the light exit surface. In the embodiment shown, where the light guide 4 comprises four side light input surfaces 41, 42, 43 44, the sum of the areas, or in other words the total area, of the first, second, third and fourth side light input surfaces 41, 42, 43, 44 is dimensioned to be less than four times the area A of the light exit surface 42. Particularly the light guide 4 is dimensioned such that the area A of the light exit surface is smaller than 100 mm² and larger than 0.25 mm² and such that the height Hᵢ is smaller than 10 mm and larger than 0.5 mm.

The light guide 4 furthermore has a length L, a width W and a height H. More specifically, the light guide 4 is configured such that the length L and the width W extend perpendicular to each other in a common plane being the plane of the light exit surface 42, while the height H is the same height as, or in other words is equal to, the height Hᵢ of the side light input surfaces and generally extends in an angle different from zero, and in the embodiment shown in Figs. 4-7 perpendicular, to both the width W and the length L of the light guide 4.

As is clear from Figs. 6 and 7, the light guide 4 is configured such that the height H is smaller than both the length L and the width W. Preferably, the light guide 4 is configured such that the height H is comprised in the interval from 0.5 mm to 10 mm and/or the length L is comprised in the interval 2 mm to 25 mm and/or the width W is comprised in the interval 2 mm to 25 mm. In embodiments the length L, width W and height H all have dimensions falling within the respective above-mentioned intervals.

In the embodiment shown all of the four side light input surfaces 41, 43, 44, 45 have the same height, which is constant in the longitudinal direction of the respective side light input surface. In alternative embodiments the side light input surfaces 41, 43, 44, 45 may have two or more mutually different heights, preferably all with a dimension falling within the interval of 0.5 mm to 10 mm, the height of each side light input surface still being constant in the longitudinal direction of the respective side light input surface. In alternative embodiments where the side light input surfaces 41, 43, 44, 45 comprise two or more mutually different heights, the light guide is configured such that the height of at least one of the side light input surfaces, but preferably however, the height of more or all of the side light input surfaces, is smaller than the length L and the width W. In yet other alternative or additional embodiments the height of one or more of the side light input surfaces may vary in the longitudinal direction of the respective side light input surface, but preferably still always falling within the interval of 0.5 mm to 10 mm.

With reference to Fig. 6, a light emitting device according to the invention generally works as follows. Light 13 having a first spectral distribution is emitted by each of the at least one light sources 211, 212, 221, 222, 231, 232, 241 and 242 as well as by each of the further light sources 251, 252, 253 and 254. Illustrated by means of the light emitted by the light source denoted 211, the light 13 having the first spectral distribution is then coupled into the light guide 4 at the first side light input surface 41. At least a part of the light 13 with the first spectral distribution is converted by the light guide 4 to light 14 having a second spectral distribution. The light 14 having the second spectral distribution is then coupled out of the light guide 4 at the light exit surface 42, and is thus emitted by the light emitting device 1.

Preferably and irrespective of the embodiment, the first spectral distribution, i.e. the spectral distribution of the light emitted by the light sources, is comprised in the range between 200 nm and 500 nm, and the second spectral distribution is comprised in the range between 400 nm and 800 nm. Thereby a light emitting device is provided which is particularly suitable for providing a white light output of a high quality and intensity.

In the embodiment shown all light sources emit light having the substantially same spectral distribution. In alternative embodiments it is however feasible that the light sources may emit light having two or more different spectral distributions.

Irrespective of the embodiment the light 13 having the first spectral distribution and the light 14 having the second spectral distribution may have identical or substantially fully overlapping spectral distributions. Alternatively and still irrespective of the embodiment, the light 13 having the first spectral distribution and the light 14 having the second spectral distribution may have different, e.g. partially overlapping or substantially non-overlapping, spectral distributions.

In embodiments (not shown) the light emitting device furthermore comprises a heat sink, preferably made of a metal such as copper, iron or aluminum, arranged on a, for example, side surface of the light guide. The heat sink comprises fins for improved heat dissipation. It is noted that in other embodiments (cf. Fig. 10), comprising a base or substrate on which the light sources are mounted, the base or substrate may be functioning as a heat sink. By providing a heat sink the heat produced by the light source may be dissipated away from the light guide in an efficient manner. This in turn provides for a raise in the maximum obtainable output light intensity of the light emitting device as well as for lowering or even eliminating the adverse effects on the optical performance of the light emitting device caused by excess heat in the light guide. The heat sink is, however, not an essential element, and may thus in yet other embodiments be omitted.

Fig. 8 shows a third embodiment of a light emitting device 102 according to the invention in a side view similar to those of Figs. 6 and 7. In this embodiment the bottom light input surface 46 of the light guide 4 is associated with four light sources 251-254. The light guide 4 furthermore comprises an outcoupling structure 9 for coupling light out of the light guide 4 in the form of a reflective polarizer 91 arranged at the light exit surface 42. Thus, in this embodiment the light emitting device 1 is adapted to emit polarized light.

Fig. 9 shows a fourth embodiment of a light emitting device 103 according to the invention in a side view similar to that of Fig. 8. In this embodiment the bottom light input surface 46 of the light guide 4 is associated with four light sources 251-254. The light guide 4 furthermore comprises an outcoupling structure 9 for coupling light out of the light guide 4 in the form of a Brightness Enhancing Film (BEF) structure 92 arranged at the light exit surface 42. In this embodiment the BEF structure provides for a light emitting device 1 adapted to emit collimated light.

In alternative embodiments the outcoupling structure 9 for coupling light out of the light guide 4 may be a grating or a photonic crystal and/or the outcoupling structure may be shaped or embedded in the light exit surface 42. In yet other embodiments, comprising both an outcoupling structure 9 for coupling light out of the light guide 4 and a heat sink, the outcoupling structure and the heat sink may be arranged in thermal contact with each other.

In the following an example illustrating the present invention will be described with reference to Figs. 10 and 11.

### Example 1

In an experiment a light emitting device 104 according to a fifth embodiment of the invention and as shown in Fig. 10 was investigated. In this embodiment the light emitting device 104 comprises a light guide 4 and four light sources 21, 22, 23 and 24 arranged on a respective base 151, 152, 153 and 154. For purposes of the experiment conducted no light sources were arranged at the (vertical) side surfaces of the light guide 4, such embodiments instead being the subject of calculations described further below.

The light sources 21, 22, 23 and 24 are high power LUMILED (LUMILEDS) DOSC LEDs having a size of 1.4 x 1.4 mm² and emitting light at a wavelength of 450 nm. The light guide 4 is provided in the form of a phosphor doped YAG:Ce plate with a light exit surface area, i.e. length L times width W, of 3 x 4 mm and adapted to convert blue light to green light. The light guide 4 is bonded with transparent silicone glue on top of the light sources 21, 22, 23 and 24.

The light output was measured at a continuous current of 1 A, 1.4 A and 2 A. The results are shown in Table 2. The DOSC LEDs used are specified to run at 1A, but in automotive applications these LEDs however run at 1.4 A. At 1.4 A the lumen light output was measured to be 1165 Lm for light extracted from the top surface of the light guide 4.

It is noted that for a thin high phosphor concentration doped YAG:Ce plate the lumen light output could in principle be as high as 1665 Lm when extracting light from both the top surface and the (vertical) side surfaces. However, as will be apparent from the table below, the lumen light output may be increased even more by instead using the side surfaces as light input surfaces as suggested by the present invention.

**Table 2: Light output measurement.**

| **Parameter** | **Experiment 1A, 55C** | **Experiment 1.4A, 55C** | **Experiment 2.0A, 55C** |
|---|---|---|---|
| P(electrical) | 11.73 | 16.74 | ∼23.46 |
| P(blue) | 5.32(45%) | 6.79(41%) | ∼8.78(37%) |
| P(green) | 3.1(58%) | 3.92 (58%) | ∼5.10 (58%) |
| P(green)/P(el) (efficiency) | 26.4% | 23.4% | 21.7% |
| Lumen light output (total light extracted from YAG top + sides) | 1330 (63%) | 1665 (63%) | 2180 (63%) |
| lumen light output/mm2 | 166 | 208 | 272 |
| lumen light output (light extracted from YAG top) | 931 (70%) | 1165 (70%) | 1525 (70%) |

An analytical light recycling model was developed based on the light emitting device 104 of the embodiment shown in Fig. 10 for calculating the expected lumen light output for different numbers of light sources. When only four light sources 21, 22, 23, 24 are optically bonded to the bottom side of the light guide 4, the thickness of the light guide 4 is close to zero. In that case the lumen light output is close to 1665 Lm, as indicated above. For use in the analytical model this value was normalized to 1.

The relation between the number of light sources and the gain in light output is illustrated in Fig. 11 and is as shown a logarithmic function. For the calculation two light sources (not shown) are added to each of the (vertical) side surfaces of the light guide 4. The height H of the light guide 4 is the same as the length and width of a single light source, i.e. 1.4 mm, such that the height H is smaller than both the length L (3 mm) and the width W (4 mm) of the top surface of the light guide 4. In this case the light emitting device 104 comprises 4 + 4x2 = 12 light sources in total. With the analytical light recycling model it is calculated that the normalized lumen light output from the top surface of the light guide is 2 as is shown in the graph of Fig. 11. This corresponds to a double light output of 3330 Lm.

For an embodiment with 20 light sources, 4 at the bottom and 4x4 at the four side surfaces, the normalized light output is 2.5 corresponding to a lumen light output of 4163 Lm. This still is a realistic and interesting solution, for example for digital projection.

For an embodiment with 45 light sources, 9 at the bottom and 4x9 at the four side surfaces, the lumen light output would be 9367 Lm.

For an embodiment with 28 light sources, 4 at the bottom and 4x6 at the four side surfaces, the normalized light output is 2.75 corresponding to a lumen light output of 4579 Lm.

It is thus clear that the positive effect of the extra light sources is initially very large and then becomes successively smaller yielding a decreasing return on the investment when adding further light sources. The overall efficiency decreases when many light sources are applied. Relatively more and more heat developed by the light sources has to be cooled.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A light emitting device comprising:
a plurality of light sources (211, 221, 231, 241) adapted for, in operation, emitting light (13) with a first spectral distribution,
a light guide (4) comprising at least three side light input surfaces (41, 43, 44, 45) and a light exit surface (42), the at least three side light input surfaces and the light exit surface extending at an angle different from zero with respect to each other,
the light guide being adapted for receiving the light (13) with the first spectral distribution from the plurality of light sources at each of the at least three side light input surfaces, guiding the light (13) to the light exit surface (42), converting at least a part of the light (13) with the first spectral distribution to light (14) with a second spectral distribution and coupling at least a part of the light (14) with the second spectral distribution out of the light exit surface (42),
the light exit surface (42) having an area (A) and a circumference (C),
the at least three side light input surfaces (41, 43, 44, 45) having a height (Hᵢ) extending at an angle different from zero to a plane in which the light exit surface (42) extends,
the circumference (C) of the light exit surface (42) being more than four times larger than the height (Hᵢ) of the side light input surfaces and the total area of the at least three side light input surfaces (41, 43, 44, 45) being less than four times the area (A) of the light exit surface (42), and
the area A of the light exit surface (42) being smaller than 100 mm² and larger than 0.25 mm².

2. A light emitting device according to claim 1, wherein the light guide (4) comprises a length (L), a width (W) and a height (H), the length (L) and the width (W) of the light guide (4) extending perpendicular to one another in a plane in which the light exit surface (42) extends, the height (H) of the light guide (4) being equal to the height (Hᵢ) of the at least three side light input surfaces (41, 43, 44, 45), and the height (H) of the light guide (4) being smaller than each of the length (L) and the width (W) of the light guide (4).

3. A light emitting device according to claim 1 or 2, wherein the light guide (4) comprises four or more side light input surfaces (41, 43, 44, 45) and the total area of the four or more side light input surfaces (41, 43, 44, 45) is less than four times the area (A) of the light exit surface (42).

4. A light emitting device according to any one of the above claims, and further comprising at least one further light source (251) adapted for, in operation, emitting light (13) with the first spectral distribution,
the light guide (4) further comprising a bottom light input surface (46) extending parallel to the light exit surface (42),
the light guide being adapted for receiving the light with the first spectral distribution from the at least one further light source (251) at the bottom light input surface (46), guiding the light to the light exit surface (42), converting at least a part of the light (13) with the first spectral distribution to light (14) with the second spectral distribution and coupling at least a part of the light (14) with the second spectral distribution out of the light exit surface (42).

5. A light emitting device according to any one of the above claims, wherein the height Hᵢ of the at least three side light input surfaces (41, 43, 44, 45) is smaller than 10 mm and larger than 0.5 mm.

6. A light emitting device according to any one of claims 2 to 5, wherein at least one of the length L and the width W of the light guide (4) is smaller than 25 mm and larger than 2 mm.

7. A light emitting device according to any one of the above claims, wherein the at least three side light input surfaces (41, 43, 44, 45) and the light exit surface (42) extend perpendicular to one another.

8. A light emitting device according to any one of the above claims, wherein the light guide (4) comprises a garnet.

9. A light emitting device according to any one of the above claims, and further comprising a heat sink adjacent to the light guide (4).

10. A light emitting device according to any one of the above claims, wherein the light guide (4) comprises an outcoupling structure (9) at the light exit surface (42).

11. A light emitting device according to any of the above claims, wherein at each of the light input surfaces two or more light sources are arranged.

12. A light emitting device according to any one of the above claims, wherein the light guide (4) comprises a cross-sectional shape chosen from the group comprising triangular, rectangular, square, trapezoid, polygonal shapes and combinations thereof.

13. A light emitting device according to any one of the above claims, wherein the first spectral distribution of the light (13) emitted by the light sources is comprised in the range from 200 nm to 500 nm.

14. A lamp, luminaire, automotive lighting device or digital projection device comprising a light emitting device (1) according to any one of the above claims.

## Patentansprüche

1. Lichtemittierende Vorrichtung, umfassend:
eine Vielzahl von Lichtquellen (211, 221, 231, 241), die dafür ausgebildet sind, im Betrieb Licht (13) mit einer ersten Spektralverteilung zu emittieren,
einen Lichtleiter (4), der mindestens drei seitliche Lichteintrittsflächen (41, 43, 44, 45) und eine Lichtaustrittsfläche (42) umfasst, wobei sich die mindestens drei seitlichen Lichteintrittsflächen und die Lichtaustrittsfläche in Bezug zueinander in einem Winkel von ungleich Null erstrecken,
wobei der Lichtleiter dafür ausgebildet ist, das Licht (13) mit der ersten Spektralverteilung von der Vielzahl von Lichtquellen an jeder der mindestens drei seitlichen Lichteintrittsflächen zu empfangen, das Licht (13) zur Lichtaustrittsfläche (42) zu leiten, mindestens einen Teil des Lichts (13) mit der ersten Spektralverteilung in Licht (14) mit einer zweiten Spektralverteilung umzuwandeln, und mindestens einen Teil des Lichts (14) mit der zweiten Spektralverteilung aus der Lichtaustrittsfläche (42) auszukoppeln,
wobei die Lichtaustrittsfläche (42) einen Flächeninhalt (A) und einen Umfang (C) aufweist,
wobei die mindestens drei seitlichen Lichteintrittsflächen (41, 43, 44, 45) eine Höhe (Hᵢ) aufweisen, die sich in einem Winkel von ungleich Null zu einer Ebene erstreckt, in der sich die Lichtaustrittsfläche (42) erstreckt,
wobei der Umfang (C) der Lichtaustrittsfläche (42) mehr als viermal größer ist als die Höhe (Hᵢ) der seitlichen Lichteintrittsflächen, und der Gesamtflächeninhalt der mindestens drei seitlichen Lichteintrittsflächen (41, 43, 44, 45) weniger als viermal den Flächeninhalt (A) der Lichtaustrittsfläche (42) beträgt, und
der Flächeninhalt A der Lichtaustrittsfläche (42) kleiner als 100 mm² und größer als 0,25 mm² ist.

2. Lichtemittierende Vorrichtung nach Anspruch 1, wobei der Lichtleiter (4) eine Länge (L), eine Breite (B) und eine Höhe (H) umfasst, wobei sich die Länge (L) und die Breite (B) des Lichtleiters (4) senkrecht zueinander in einer Ebene erstrecken, in der sich die Lichtaustrittsfläche (42) erstreckt, wobei die Höhe (H) des Lichtleiters (4) gleich der Höhe (Hᵢ) der mindestens drei seitlichen Lichteintrittsflächen (41, 43, 44, 45) ist, und die Höhe (H) des Lichtleiters (4) kleiner ist als jedes aus der Länge (L) und der Breite (B) des Lichtleiters (4).

3. Lichtemittierende Vorrichtung nach Anspruch 1 oder 2, wobei der Lichtleiter (4) vier oder mehr seitliche Lichteintrittsflächen (41, 43, 44, 45) umfasst, und der Gesamtflächeninhalt der vier oder mehr seitlichen Lichteintrittsflächen (41, 43, 44, 45) weniger als viermal den Flächeninhalt (A) der Lichtaustrittsfläche (42) beträgt.

4. Lichtemittierende Vorrichtung nach einem der obenstehenden Ansprüche, und weiter mindestens eine weitere Lichtquelle (251) umfassend, die dafür ausgebildet ist, im Betrieb Licht (13) mit der ersten Spektralverteilung zu emittieren,
wobei der Lichtleiter (4) weiter eine untere Lichteintrittsfläche (46) umfasst, die sich parallel zur Lichtaustrittsfläche (42) erstreckt,
wobei der Lichtleiter dafür ausgebildet ist, das Licht mit der ersten Spektralverteilung von der mindestens einen weiteren Lichtquelle (251) an der unteren Lichteintrittsfläche (46) zu empfangen, das Licht zur Lichtaustrittsfläche (42) zu leiten, mindestens einen Teil des Lichts (13) mit der ersten Spektralverteilung in Licht (14) mit der zweiten Spektralverteilung umzuwandeln, und mindestens einen Teil des Lichts (14) mit der zweiten Spektralverteilung aus der Lichtaustrittsfläche (42) auszukoppeln.

5. Lichtemittierende Vorrichtung nach einem der obenstehenden Ansprüche, wobei die Höhe Hᵢ der mindestens drei seitlichen Lichteintrittsflächen (41, 43, 44, 45) kleiner als 10 mm und größer als 0,5 mm ist.

6. Lichtemittierende Vorrichtung nach einem der Ansprüche 2 bis 5, wobei mindestens eines aus der Länge L und der Breite B des Lichtleiters (4) kleiner als 25 mm und größer als 2 mm ist.

7. Lichtemittierende Vorrichtung nach einem der obenstehenden Ansprüche, wobei sich die mindestens drei seitlichen Lichteintrittsflächen (41, 43, 44, 45) und die Lichtaustrittsfläche (42) senkrecht zueinander erstrecken.

8. Lichtemittierende Vorrichtung nach einem der obenstehenden Ansprüche, wobei der Lichtleiter (4) einen Granat umfasst.

9. Lichtemittierende Vorrichtung nach einem der obenstehenden Ansprüche, und weiter eine Wärmesenke umfassend, die an den Lichtleiter (4) angrenzt.

10. Lichtemittierende Vorrichtung nach einem der obenstehenden Ansprüche, wobei der Lichtleiter (4) an der Lichtaustrittsfläche (42) eine Auskoppelstruktur (9) umfasst.

11. Lichtemittierende Vorrichtung nach einem der obenstehenden Ansprüche, wobei an jeder der Lichteintrittsflächen zwei oder mehr Lichtquellen angeordnet sind.

12. Lichtemittierende Vorrichtung nach einem der obenstehenden Ansprüche, wobei der Lichtleiter (4) eine Querschnittsform umfasst, ausgewählt aus der Gruppe, die dreieckige, rechteckige, quadratische, trapezförmige, polygonale Formen und Kombinationen davon umfasst.

13. Lichtemittierende Vorrichtung nach einem der obenstehenden Ansprüche, wobei die erste Spektralverteilung des von den Lichtquellen emittierten Lichts (13) im Bereich von 200 nm bis 500 nm umfasst ist.

14. Lampe, Leuchte, Fahrzeugbeleuchtungsvorrichtung oder digitale Projektionsvorrichtung, die eine lichtemittierende Vorrichtung (1) nach einem der obenstehenden Ansprüche umfasst.

## Revendications

1. Dispositif d'émission lumineuse comprenant :
une pluralité de sources lumineuses (211, 221, 231, 241) adaptées pour, en fonctionnement, émettre de la lumière (13) avec une première distribution spectrale,
un guide de lumière (4) comprenant au moins trois surfaces d'entrée de lumière latérales (41, 43, 44, 45) et une surface de sortie de lumière (42), les au moins trois surfaces d'entrée de lumière latérales et la surface de sortie de lumière s'étendant à un angle différent de zéro les unes par rapport aux autres,
le guide de lumière étant adapté pour recevoir la lumière (13) avec la première distribution spectrale à partir de la pluralité de sources lumineuses au niveau de chacune des au moins trois surfaces d'entrée de lumière latérales, guider la lumière (13) jusqu'à la surface de sortie de lumière (42), convertir au moins une partie de la lumière (13) avec la première distribution spectrale en lumière (14) avec une seconde distribution spectrale et coupler au moins une partie de la lumière (14) avec la seconde distribution spectrale hors de la surface de sortie de lumière (42),
la surface de sortie de lumière (42) ayant une superficie (A) et une circonférence (C),
les au moins trois surfaces d'entrée de lumière latérales (41, 43, 44, 45) ayant une hauteur (Hᵢ) s'étendant à un angle différent de zéro jusqu'à un plan dans lequel la surface de sortie de lumière (42) s'étend,
la circonférence (C) de la surface de sortie de lumière (42) étant plus de quatre fois supérieure à la hauteur (Hᵢ) des surfaces d'entrée de lumière latérales et la superficie totale des au moins trois surfaces d'entrée de lumière latérales (41, 43, 44, 45) étant de moins de quatre fois la superficie (A) de la surface de sortie de lumière (42), et
la superficie A de la surface de sortie de lumière (42) étant inférieure à 100 mm² et supérieure à 0,25 mm².

2. Dispositif d'émission lumineuse selon la revendication 1, dans lequel le guide de lumière (4) comprend une longueur (L), une largeur (W) et une hauteur (H), la longueur (L) et la largeur (W) du guide de lumière (4) s'étendant perpendiculaires l'une à l'autre dans un plan dans lequel la surface de sortie de lumière (42) s'étend, la hauteur (H) du guide de lumière (4) étant égale à la hauteur (Hᵢ) des au moins trois surfaces d'entrée de lumière latérales (41, 43, 44, 45), et la hauteur (H) du guide de lumière (4) étant inférieure à chacune de la longueur (L) et la largeur (W) du guide de lumière (4).

3. Dispositif d'émission lumineuse selon la revendication 1 ou 2, dans lequel le guide de lumière (4) comprend quatre surfaces d'entrée de lumière latérales (41, 43, 44, 45) ou plus et la superficie totale des quatre surfaces d'entrée de lumière latérales (41, 43, 44, 45) ou plus est de moins de quatre fois la superficie (A) de la surface de sortie de lumière (42).

4. Dispositif d'émission lumineuse selon l'une quelconque des revendications ci-dessus, et comprenant en outre au moins une autre source lumineuse (251) adaptée pour, en fonctionnement, émettre de la lumière (13) avec la première distribution spectrale,
le guide de lumière (4) comprenant en outre une surface d'entrée de lumière inférieure (46) s'étendant parallèle à la surface de sortie de lumière (42),
le guide de lumière étant adapté pour recevoir la lumière avec la première distribution spectrale à partir de l'au moins une autre source lumineuse (251) au niveau de la surface d'entrée de lumière inférieure (46), guider la lumière jusqu'à la surface de sortie de lumière (42), convertir au moins une partie de la lumière (13) avec la première distribution spectrale en lumière (14) avec la seconde distribution spectrale et coupler au moins une partie de la lumière (14) avec la seconde distribution spectrale hors de la surface de sortie de lumière (42).

5. Dispositif d'émission lumineuse selon l'une quelconque des revendications ci-dessus, dans lequel la hauteur Hᵢ des au moins trois surfaces d'entrée de lumière latérales (41, 43, 44, 45) est inférieure à 10 mm et supérieure à 0,5 mm.

6. Dispositif d'émission lumineuse selon l'une quelconque des revendications 2 à 5, dans lequel au moins une parmi la longueur L et la largeur W du guide de lumière (4) est inférieure à 25 mm et supérieure à 2 mm.

7. Dispositif d'émission lumineuse selon l'une quelconque des revendications ci-dessus, dans lequel les au moins trois surfaces d'entrée de lumière latérales (41, 43, 44, 45) et la surface de sortie de lumière (42) s'étendent perpendiculaires les unes aux autres.

8. Dispositif d'émission lumineuse selon l'une quelconque des revendications ci-dessus, dans lequel le guide de lumière (4) comprend un grenat.

9. Dispositif d'émission lumineuse selon l'une quelconque des revendications ci-dessus, et comprenant en outre un dissipateur thermique adjacent au guide de lumière (4).

10. Dispositif d'émission lumineuse selon l'une quelconque des revendications ci-dessus, dans lequel le guide de lumière (4) comprend une structure de couplage externe (9) au niveau de la surface de sortie de lumière (42).

11. Dispositif d'émission lumineuse selon l'une quelconque des revendications ci-dessus, dans lequel au niveau de chacune des surfaces d'entrée de lumière deux sources lumineuses ou plus sont agencées.

12. Dispositif d'émission lumineuse selon l'une quelconque des revendications ci-dessus, dans lequel le guide de lumière (4) comprend une forme transversale choisie dans le groupe comprenant des formes triangulaires, rectangulaires, carrées, trapézoïdes, polygonales et des combinaisons de celles-ci.

13. Dispositif d'émission lumineuse selon l'une quelconque des revendications ci-dessus, dans lequel la première distribution spectrale de la lumière (13) émise par les sources lumineuses est comprise dans la plage de 200 nm à 500 nm.

14. Lampe, luminaire, dispositif d'éclairage automobile ou dispositif de projection numérique comprenant un dispositif d'émission lumineuse (1) selon l'une quelconque des revendications ci-dessus.
